# EUROPÄISCHE PATENTSCHRIFT

(11) **EP 1 378 628 B1**
(45) Veröffentlichungstag und Bekanntmachung des Hinweises auf die Patenterteilung: **19.10.2005**
(21) Anmeldenummer: 03019918.6
(22) Anmeldetag: 04.08.2000
(51) Int. Cl.: F01B 3/00, F04B 1/12

(54) **Hohlkolben für eine Kolbenmaschine und Verfahren zum Herstellen eines Hohlkolbens**
Hollow piston for a piston machine and method for producing a hollow piston
Piston creux pour machine à piston et procédé pour fabriquer un piston creux

(30) Priorität: 12.08.1999 DE 19938046
(43) Veröffentlichungstag der Anmeldung: 07.01.2004
(62) Teilanmeldung aus: 00116900.2
(73) Patentinhaber: Brueninghaus Hydromatik GmbH, 89275 Elchingen (DE)
(72) Erfinder: Beck, Josef, 72401 Haigerloch (DE)
(74) Vertreter: Körfer, Thomas

(56) Entgegenhaltungen:
- WO-A-98/36156
- DE-A- 3 406 782
- DE-C- 19 620 167
- GB-A- 1 414 037
- US-A- 5 072 655

## Beschreibung

Die Erfindung bezieht sich auf einen Hohlkolben für eine Kolbenmaschine nach dem Oberbegriff des Anspruches 1 bzw. auf Verfahren zum Herstellen eines Hohlkolbens.

Ein Hohlkolben und ein Verfahren zum Herstellen eines Hohlkolbens sind in der DE 196 20 167 C2 beschrieben. Bei diesem Stand der Technik besteht zwischen der Umfangswand und einem Mittelzapfen des Hohlkolbens ein Ringhohlraum, der durch Tiefbohren spanabhebend hergestellt ist, wobei die Umfangswand und der Mittelzapfen einstückig mit einem Basisabschnitt des Hohlkolbens ausgebildet sind. Im freien Endbereich des Hohlkolbens ist der Ringhohlraum durch eine Verschlußanordnung geschlossen, die durch einen Deckel gebildet ist, der durch Elektronenstrahlschweißen mit der Umfangswand und dem Mittelzapfen verbunden ist. Dieser vorbekannte Hohlkolben ist somit zweistückig ausgebildet, wobei das Basisteil mit der Umfangswand und mit dem Mittelzapfen das eine Kolbenstück bilden und der Deckel das andere Kolbenstück bildet.

Ein aus der WO 98/36156 bekannter Hohlkolben für eine Kolbenmaschine besteht aus einem Außenrohr und einem einen Mittelzapfen bildendem Innenrohr, wobei letzteres das Außenrohr axial über dessen gesamte Länge durchsetzt, das heißt auch den Basisabschnitt und das Kugelgelenkteil, wobei das Innenrohr an beiden Enden dadurch im Außenrohr axial fixiert ist, daß das Außenrohr jeweils eine radial einwärts gerichtete Einformung aufweist, mit der es eine Verjüngung des Innenrohrs hintergreift bzw. in eine Ringausnehmung des Innenrohrs einfaßt.

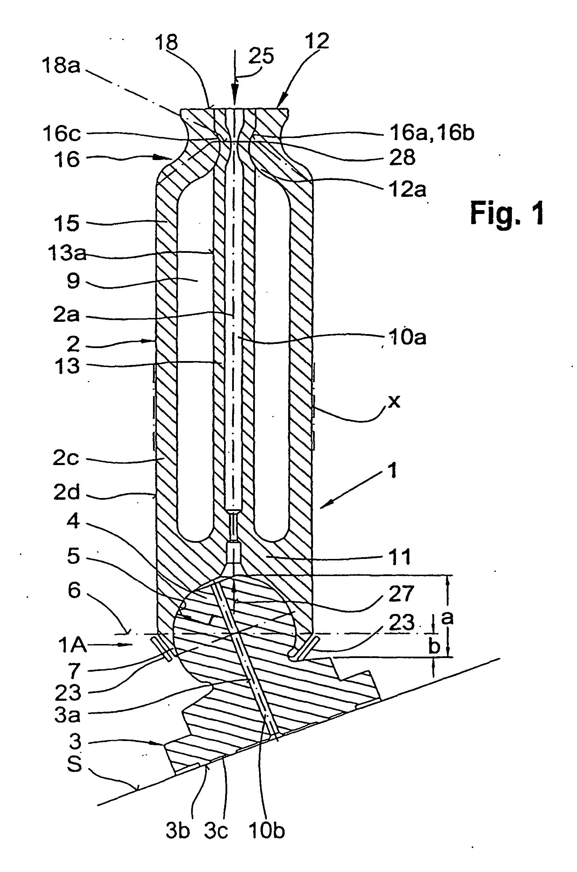

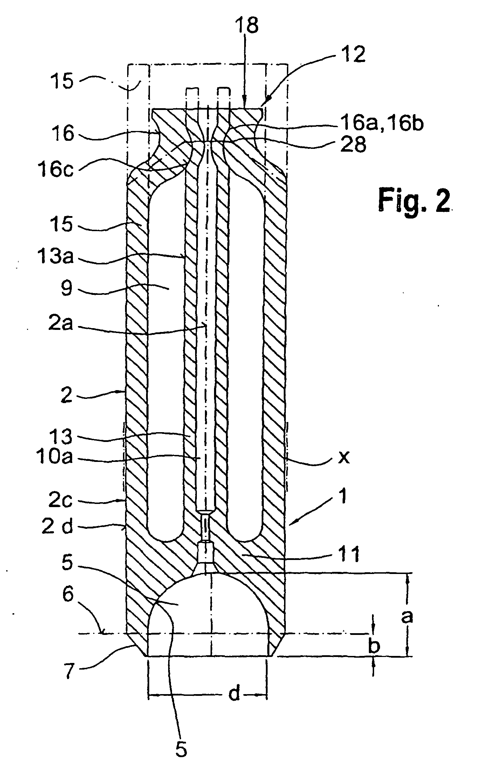

In EP 0 402 623 A1 ist ein Kolben für eine Kolbenmaschine beschrieben, bestehend aus einem Hohlkolben, dessen Hohlraum gemäß Figur 1 durch ein Füllstück gefüllt ist, das durch eine in die Mantelfläche des Hohlkolbens eingeformte Einrollung formschlüssig im Hohlkolben fixiert ist, wobei die Einrollung radial einwärts auch in die Mantelfläche des Füllstücks ringförmig eingeformt ist. Bei einer Variante gemäß Figur 2 dieser Druckschrift befindet sich die Einrollung im Bereich eines Füllstückkopfes, wobei der übrige, sich in Richtung auf den Basisabschnitt des Kolbens erstreckende Abschnitt des Füllstücks im Querschnitt verjüngt und durch einen Mittelzapfen gebildet ist, so daß in diesem verjüngten Bereich zwischen der Umfangswand des Hohlkolbens und dem Mittelzapfen ein Ringhohlraum besteht. Hierdurch soll Material und Gewicht eingespart werden.

In der DE 34 06 782 C2 ist ein Hohlkolben nach dem Oberbegriff der Ansprucher 1 beschrieben, der mit einer einen offenen Hohlraum umgebenden Umfangswand, einem eingeschnürten Kolbenhals und einer daran angeordneten Gelenkkugel einstückig aus einem Rohrstück kaltverformt ist. Bei diesem bekannten Kolben sind spangebende Verformungen und daraus resultierende Materialverluste vermieden bzw. zumindest vermindert, wobei der Hohlkolben sich durch ein geringes Gewicht auszeichnet. Aufgrund der offenen Bauweise des Hohlkolbens ist jedoch zumindest dann, wenn die Umfangswand verhältnismäßig dünn bemessen ist, mit einer Querschnittsvergrößerung des Hohlkolbens bei hohem Druck und mit Laufschwierigkeiten aufgrund verringerten Begleitspiels zu rechnen. Außerdem neigt die offene Bauweise aufgrund des verhältnismäßig großen Volumens der Kolbenkammern im Funktionsbetrieb einer zugehörigen Kolbenmaschine zu Kompressionsverlusten.

Der Erfindung liegt die Aufgabe zugrunde, einen Hohlkolben nach dem Oberbegriff des Anspruchs 1 so auszugestalten, daß er bei Gewährleistung einer stabilen Bauweise einfach und kostengünstig herstellbar ist, und ein entsprechendes Herstellungsverfahren anzugeben. Außerdem sollen im Funktionsbetrieb des Kolbens Druckverluste vermieden werden.

Diese Aufgabe wird bezüglich des Hohlkolbens durch die Merkmale des Anspruches 1 und bezüglich des Herstellungsverfahrens durch die Merkmale der Ansprüche 15 oder 16 gelöst.

Den erfindungsgemäßen Hohlkolben ist gemeinsam, daß sie einstückig ausgebildet sind, wobei die Verschlußanordnung durch eine radial einwärts gerichtete Einformung der Umfangswand gebildet ist. Hierdurch wird die Herstellung vereinfacht und kostengünstig, da die Herstellung und Bereithaltung sowie Verwendung zusätzlicher Kolbenteile entfällt und die Herstellungsmaßnahmen nur an einem Teil ausgeführt werden. Außerdem wird der Hohlkolben im Bereich der Verschlußanordnung durch die Einformung der Umfangswand verfestigt und stabilisiert. Deshalb kann der erfindungsgemäße Hohlkolben mit einer geringeren Wandungsdicke konzipiert werden, wodurch im weiteren Material und Gewicht eingespart werden kann.

Die vorbeschriebenen Vorteile gelten auch für erfindungsgemäße Verfahren zum Herstellen von Hohlkolben nach den Ansprüchen 15 und 16, die eine einfache, schnelle und kostengünstige Herstellung gewährleisten.

Die Einformung der Umfangswand läßt sich sehr vorteilhaft durch ein kaltes oder warmes Einrollen bewerkstelligen, wobei eine materialschonende Verformung stattfindet und außerdem eine Rückverformung der Einformung aufgrund der vorhandenen Materialelastizität gering gehalten werden kann. Hierdurch läßt sich somit auch ein fester und dichter Verschluß des Hohlraums erreichen. Hierzu ist es vorteilhaft, die Einrollung im Sinne einer vollständigen Einschnürung auszubilden, so daß die Umfangswand sozusagen auf Null tailliert wird, wobei ein solcher Tailienstummel von der Stirnseite des Hohlkolbens etwas abstehen kann.

Es ist im weiteren von Vorteil, den Hohlkolben mit einem einstückig mit dem Basisteil des Hohlkolbens ausgebildeten Mittelzapfen auszugestalten. Der Mittelzapfen stellt sich als ein axiales Stütz- und Stabilisierungselement dar, das sich je nach Belastungsrichtung (Druckhub, Saughub) axial an der Einformung bzw. am Basisabschnitt abstützen kann, wodurch diese Teile wesentlich stabilisiert werden. Infolgedessen kann der Basisabschnitt und die Einformung mit einer geringeren axialen Dicke ausgebildet werden. Zu dieser Verkürzung und Stabilisierung läßt sich auch noch Material und Gewicht einsparen, was durch die verringerte Längsabmessung des Hohlkolbens bedingt ist. Eine vorteilhafte Abstützung bzw. Verbindung zwischen der Einformung und dem Mittelzapfen läßt sich dann erreichen, wenn die Einformung gegen die Mantelfläche des Mittelzapfens eingeformt ist, wodurch sich ein fester Preßsitz zwischen diesen Teilen verwirklichen läßt. Die Festigkeit dieses Preßsitzes läßt sich weiter vergrößern, wenn die Einformung eine Schulterfläche des Mittelzapfens hintergreift oder in eine Ringnut in der Mantelfläche des Mittelzapfens eingreift, wodurch eine axiale formschlüssige Verbindung geschaffen wird.

Im Rahmen der Erfindung ist es möglich und vorteilhaft, eine einstückige Ausbildung der Umfangswand und des Mittelzapfens durch eine spanabhebende Ausarbeitung des Ringhohlraums oder eine spanlose Anformung der Umfangswand und des Mittelzapfens an einem Basisabschnitt oder an einer Stirnwand des Hohlkolbens zu schaffen. Letzteres kann zum Beispiel durch Fließpressen erfolgen, wodurch das Materialgefüge verfestigt wird und sich letztlich ein günstiger Materialfaserverlauf einstellt. Durch eine spanlose Anformung wird nicht nur der durch ein spanabhebendes Tiefbohren hervorgerufene Materialverlust vermieden, sondern es werden auch beim Tiefbohren entstehende, in Umfangsrichtung verlaufende Riefen in der Innenmantelfläche der Umfangswand und der Außenmantelfläche des Mittelzapfens vermieden, wodurch der Hohlkolben eine wesentlich größere Stabilität erhält. Außerdem läßt sich ein einstückiges Anformen herstellungstechnisch einfacher und schneller durchführen.

Es ist besonders vorteilhaft, die Umfangswand und den Mittelzapfen durch Fließpressen anzuformen. Hierdurch wird nicht nur eine einfach und schnell durchführbare Umformung erreicht, sondern beim Fließpressen ergibt sich auch ein in der Längsrichtung des Kolbens gerichteter Materialfaserverlauf, wodurch die Umfangswand und der Mittelzapfen ein besonders großes Widerstandsmoment gegen Biegebelastungen erhalten, was auf Material- und Gefügeverdichtung beruht.

Im Rahmen der Erfindung können die Umfangswand und der Mittelzapfen auch dadurch gebildet sein, daß diese Teile mit dem Hohlkolben aus Sintermaterial bestehen und mit dem sich zwischen der Umfangswand und dem Mittelzapfen erstreckenden Ringhohlraum geformt und gesintert sind. Hierdurch wird ebenfalls nicht nur eine einfache und kostengünstige Herstellung erreicht, sondern es kann auch der Vorteil ausgenutzt werden, daß ein Sinterwerkstoff sich als Gleitwerkstoff gut eignet, was darauf zurückzuführen ist, daß die bei einem Sinterwerkstoff vorhandenen Poren Schmierstofftaschen bilden, die eine gute Schmierung und einen verhältnismäßig geringen Verschleiß der Gleitflächen gewährleisten.

Nachfolgend werden die Erfindung und weitere durch sie erzielbare Vorteile anhand von bevorzugten Ausgestaltungen und Zeichnungen näher erläutert. Es zeigen:
- Fig. 1: eine Kolbenanordnung mit einem erfindungsgemäßen Hohlkolben im axialen Schnitt;
- Fig. 2: den Hohlkolben der Kolbenanordnung in einer vorgefertigten Form im axialen Schnitt;
- Fig. 3: eine Kolbenanordnung mit einem erfindungsgemäßen Hohlkolben in abgewandelter Ausgestaltung im axialen Schnitt;
- Fig. 4: einen erfindungsgemäßen Hohlkolben in weiter abgewandelter Ausgestaltung im axialen Schnitt;
- Fig. 5: einen erfindungsgemäßen Hohlkolben in weiter abgewandelter Ausgestaltung im axialen Schnitt; und
- Fig. 6: einen erfindungsgemäßen Hohlkolben in weiter abgewandelter Ausgestaltung im axialen Schnitt.

Die allgemein mit 1 bezeichnete Kolbenanordnung umfaßt einen Hohlkolben 2, vorzugsweise aus Stahl, und einen Gleitschuh 3, vorzugsweise aus Bronze oder Messing, die durch eine Kugelgelenkverbindung 1A bei Gewährleistung allseitig begrenzter Schwenkbewegungen zwischen dem Hohlkolben 2 und dem Gleitschuh 3 schwenkbar miteinander verbunden sind. Die Mittelachsen des Kolbens 2 und des Gleitschuhs 3 sind mit 2a und 3a bezeichnet.

Die Gelenkverbindung 1A weist eine kalottenförmige bzw. kugelabschnittförmige Gelenkausnehmung 5 mit einer Tiefe a auf, die größer ist als der Kugelradius r einer darin schwenkbar gelagerten Gelenkkugel 4, wobei ein den Äquator 6 der Gelenkausnehmung 5 axial überragender Ausnehmungsrand 7 die Gelenkkugel 4 hintergreift und dabei der in dieser Kugelringzone konvergenten Form der Gelenkugel 4 bei Aufrechterhaltung eines Bewegungsspiels wenigstens teilweise folgen kann. Wie aus Fig. 1 zu entnehmen ist, ist die axiale Länge b des Ausnehmungsrandes 7 so lang bemessen, daß sie in der in Fig. 1 dargestellte maximalen Schwenkstellung nicht gegen einen Kugelhals oder den Gleitschuhkörper stößt. Beim vorliegenden Ausführungsbeispiel verjüngt sich der Ausnehmungsrand 7 zu seinem freien Ende hin, wobei die Außenmantelfläche vorzugsweise eine Kegelfläche sein kann.

Längs durch den Hohlkolben 2 und den Gleitschuh 3 erstreckt sich jeweils ein Kanal 10a, 10b, der in eine an der ebenen Fußfläche 3b des Gleitschuhs 3 angeordnete flache Ausnehmung 3c mündet. Durch die Kanäle 10a, 10b kann sich im Funktionsbetrieb der hydrostatischen Maschine der Arbeitsdruck im hydraulischen Medium bis zur Ausnehmung 3c fortpflanzen, wo das hydraulische Medium eine Schmierung und der Druck eine Druckentlastung in an sich bekannter Weise bewirkt.

Der Hohlkolben 2 besteht vorzugsweise aus härtbarem Stahl, insbesondere aus durch Nitrierhärten härtbarem Stahl. Zwecks Vergrößerung der Festigkeit und Härte ist seine Mantelfläche vorzugsweise nitriert und gehärtet.

Die vorliegende Kugelgelenkverbindung 1A eignet sich zur schwenkbaren Abstützung eines Kolbens 2 für Kolbenmaschinen, insbesondere Axialkolbenmaschinen, z. B. an einer Stützfläche S, an der der Gleitschuh 3 mit seiner Fußfläche 3b anliegt. Bei einer Axialkolbenmaschine verstellbaren Durchsatzvolumens kann es sich bei der Stützfläche S um die schiefe Fläche einer sogenannten verstellbaren Schrägscheibe handeln. Bei einer Axialkolbenmaschine nicht verstellbaren Durchsatzvolumens kann das Gelenkteil des Hohlkolbens 2 an einem fest bzw. unbeweglich angeordneten korrespondierenden Gelenkteil der Kolbenmaschine gelagert sein. Die erfindungsgemäßen Hohlkolben 2 eignen sich für eine Schrägscheibenmaschine, eine Taumelscheibenmaschine oder eine Schrägachsenmaschine. Bei der Verwendung der Hohlkolben 2 für Schrägachsenmaschinen ist es vorteilhaft, die Umfangswand 15 konisch bzw. kegelstumpfförmig auszubilden, um ein Verkanten in den Bohrungen der Zylindertrommel zu vermeiden bzw. eine Mitnahme der Zylindertrommel zu erreichen.

Der als Ringraum ausgebildete Hohlraum 9 erstreckt sich von einem hinteren Basisabschnitt 11 des Hohlkolbens 2, an den sich die Gelenkausnehmung 5 nach hinten anschließt, bis zu einem stirnseitigen Endabschnitt nach vorne, der durch eine Verschlußanordnung 12 für den Hohlraum 9 gebildet ist. Der Hohlraum 9 umgibt einen im wesentlichen zylindrischen Mittelzapfen 13, der sich einteilig vom Basisabschnitt 11 nach vorne erstreckt. Auch die hohlzylindrische Umfangswand 15 erstreckt sich ebenfalls einteilig vom Basisabschnitt 11 nach vorne. Die Umfangswand 15 und der Mittelzapfen 13 sind einstückig am Basisabschnitt 11 bzw. am Hohlkolben 2 ausgebildet. Diese Ausbildung kann spanabhebend, zum Beispiel durch Tiefbohren, oder spanlos, zum Beispiel durch Fließpressen oder durch Sintern in einer Form, erfolgen. Die Umfangswand 15 und die Verschlußanordnung 12 bilden einen hohlen zylindrischen Kolbenschaft 2b, an dessen hinteren Ende ein Kugelgelenkteil angeordnet ist, das beim Ausführungsbeispiel nach Fig. 1 durch die Gelenkausnehmung 5 gebildet ist.

Diese spanlose Formgebung erfolgt an einem in Fig. 2 dargestellten Kolbenrohling 2c, der vorzugsweise mit einem Querschnittsübermaß X hergestellt ist. Bei dieser Vorformung wird die hohlzylindrische Umfangswand 15 mit einer größeren Länge hergestellt, so daß sie den zylindrischen Mittelzapfen 13 um ein durch eine spätere Verformung bestimmtes Maß überragt, wie es Fig. 2 zeigt. Die kugelabschnittförmige Gelenkausnehmung 5 wird vorzugsweise spanabhebend mit einem Ausnehmungsrand 7 vorgefertigt, der sich mit einem Innendurchmesser d axial erstreckt, der unter Berücksichtigung eines Bewegungsspiels größer bemessen ist als der Durchmesser der Gelenkkugel 4, so daß diese in die Gelenkausnehmung 5 einführbar ist.

Die Verschlußanordnung 12 ist durch eine radial einwärts gerichtete Einformung 16 der Umfangswand 15 in ihrem vorderen Endbereich gebildet. Dabei ist die Umfangswand 15 gegen die Mantelfläche 13a des Mittelzapfens 13 geformt, so daß die Einformung 16 sich bis zum Mittelzapfen 13 erstreckt und diesen eng und dicht umschließt. Dabei ist es vorteilhaft, die Einformung 16 so auszubilden, daß sie mit einer radial einwärts gerichteten Spannung gegen den Mittelzapfen 13 drückt und diesen somit einklemmt, wodurch der Mittelzapfen 13 im Sinne eines Klemmsitzes in der Einformung 16 angeordnet ist und die Abdichtung verbessert wird. Vorzugsweise ist die Einformung 16 mit einem so großen radial einwärts gerichteten Druck gebildet, daß auch am Mittelzapfen 13 eine radial einwärts gerichtete Einformung 16a ausgebildet wird, wodurch sich an der Mantelfläche 13a des Mittelzapfens 13 eine im Querschnitt vorzugsweise gerundete Ringnut 16b ausbildet, in die die Einformung 16 mit einem radial einwärts gerichteten Ringwulst 16c einfaßt, vorzugsweise mit einer radial einwärts gerichteten Klemmspannung. Die Einformung 16 wird vorzugsweise durch ein Einrollen der Umfangswand 15 gebildet. Die Einformung 16a am Mittelzapfen 13 führt zu einer Querschnittsverringerung des Kanals 10a, der sich von der Stirnseite 18 des Kolbens 2 durchgehend bis zum Grund der Gelenkausnehmung 5 erstreckt. Diese Querschnittsverringerung kann als Drossel benutzt werden.

Im Rahmen der Erfindung ist es möglich, die Einformung 16 nicht gegen den Mittelzapfen 13, sondern gegen sich selbst einzuformen, so daß die von der Umfangswand 15 umgebene Öffnung des Hohlraums 9 durch das Einformen auf Null verkleinert und dadurch geschlossen wird. Der Mittelzapfen 13 erstreckt sich dabei bis zur Verschlußanordnung 12 bzw. zur Einformung 16, wobei die Einformung 16 den Mittelzapfen 13 hintergreift und dadurch dessen freies Ende radial fixiert.

Nachfolgend werden Verfahrensschritte eines vorteilhaften Herstellungsverfahrens für den Hohlkolben 2 beschrieben:
- Ablängen eines Ausgangsrohlings hinreichenden Vollvolumens, der vorzugsweise eine um das Maß X vergrößerte Querschnittsgröße aufweist.
- Spanabhebendes oder spanloses Formen des Mittelzapfens 13 und der Umfangswand 15 vorzugsweise gleichzeitig bzw. Formen eines vorderendig offenen Hohlraumes 9 am Ausgangsrohling.
- Formen eines Kugelgelenkteils am der Umfangswand 15 abgewandten Ende des Basisabschnitts 11, zum Beispiel in eine halbkugelförmige Ausnehmung mit einem Ausnehmungsrand 7 in eine offene Vorform gemäß Fig. 2, was spanabhebend oder spanlos erfolgen kann.
- Schließen des Hohlraums 9 durch ein Einformen der Umfangswand 15, vorzugsweise durch Einrollen.
- Härten oder Nitrierhärten wenigstens der Mantelfläche 2d des Hohlkolbens 2.
- Fein- bzw. Nachbearbeiten der Mantelfläche 2d des Hohlkolbens 2, vorzugsweise durch Schleifen.
- Herstellen der formschlüssigen Verbindung des Hohlkolbens 2 mit dem Gleitschuh 3 bzw. einem entsprechenden Gelenkteil, hier durch ein Bördeln des Ausnehmungsrandes 7.

Für den zuletzt beschriebenen Verbindungsvorgang eignen sich vorzugsweise folgende Maßnahmen:

Zum Verbinden werden die Gelenkkugel 4 und die Gelenkausnehmung 5 zusammengesteckt und gegebenenfalls der Gleitschuh 3 in seiner mittleren Stellung gehalten, was durch Abstützen erfolgen kann. Dann wird der Ausnehmungsrand 7 mittels einer geeigneten Heizvorrichtung, zum Beispiel in Form eines andeutungsweise dargestellten Heizringes 23, etwa auf seiner axialen Länge b, auf eine Temperatur erwärmt, bei der die Härte des Materials vermindert wird, so daß auch nach dem Erkalten des Materials der Ausnehmungsrand 7 mit geringeren Verformungskräften kaltgebördelt werden kann. Oder der Ausnehmungsrand 7 kann auf eine Temperatur erwärmt werden, bei der die Festigkeit des Materials verringert ist und der Ausnehmungsrand 7 warmgebördelt werden kann. In beiden Fällen läßt sich der Ausnehmungsrand 7 mit relativ geringen Kräften plastisch in die in Fig. 1 dargestellte, die Gelenkkugel 4 formschlüssig hintergreifende Form bördeln.

Die verhältnismäßig geringen Verformungskräfte stellen sicher, daß der Ausnehmungsrand 7 ohne eine mechanische Überlastung des zum Beispiel aus weicherem Material bestehenden Gleitschuhs 3 verformt wird.

Das Erwärmen kann durch direkte Erwärmung zum Beispiel mittels einer Flamme oder induktiv durch eine induktive elektrische Heizvorrichtung erfolgen. Durch das lokale Erwärmen des Ausnehmungsrandes 7 wird in diesem Bereich das gehärtete Material wieder weich und es kann somit leicht verformt werden, ohne daß der übrige Bereich des Kolbens 2 wesentliche Härteverluste erleidet.

Ein wesentlicher Vorteil dieses Verfahrens zum Verbinden des Hohlkolbens 2 mit dem Gleitschuh 3 besteht darin, daß der Hohlkolben 2 vor dem Zusammenfügen und Verbinden mit dem Gleitschuh 3 vollständig bearbeitet werden kann, ohne daß bei der vorbeschriebenen Erwärmung besondere Maßnahmen im Hinblick auf das Bördeln erforderlich wären, wie zum Beispiel Abdecken des zu verformenden Ausnehmungsrandes 7 beim Nitrieren, insbesondere Gasnitrieren, Abdrehen bereits nitrierter Bereiche vor dem Bördeln usw. Durch Feinabstimmung der Vorgänge Erwärmen, Bördeln und Abkühlen kann das optimale Spiel der Kugelgelenkverbindung 1 sehr einfach eingestellt und auch in der Serienfertigung sicher reproduziert werden.

Die Anordnung des Mittelzapfens 13 führt zum einen zu einer wesentlichen Stabilisierung des Hohlkolbens 2 und zwar nicht nur hinsichtlich Biegespannungen sondern bezüglich axialen Druckspannungen, denen der Hohlkolben 2 insbesondere bei einem Druckhub ausgesetzt ist, bei dem eine durch den Pfeil 25 verdeutlichte Druckkraft gegen seine vorderseitige Arbeitsfläche an seinem freien Ende wirkt, die vom Gleitschuh 3 in der Gelenkverbindung 1A aufgenommen wird. Dabei wird die mit dem Pfeil 27 verdeutlichte, gleich große und entgegengerichtete Widerstandskraft in den Hohlkolben 2 eingeleitet und zwar gegen den Basisabschnitt 3. Der Basisabschnitt 3 und die vordere Stirnwand 12a sind somit die den Druckspannungen unmittelbar ausgesetzten Teile des Hohlkolbens 2.

Bei der erfindungsgemäßen Ausgestaltung bildet der Mittelzapfen 13 ein axial wirksames Stütz- bzw. Verbindungsteil, das bei der Wirksamkeit von Druckkräften 25, 27 die Druckspannung auf den Basisabschnitt 3 und den Deckel bzw. die Stirnwand 12a verteilt, so daß diese Teile mit einer geringeren Druckspannung beaufschlagt werden. Deshalb können der Basisabschnitt 3 und/oder die Stirnwand 12a mit einer kleineren axialen Abmessung, das heißt dünner ausgebildet werden. Folglich läßt sich der Hohlkolben 2 oder auch eine diese Hohlkolben 2 aufweisende Kolbenmaschine, insbesondere Axialkolbenmaschine, mit einer entsprechend kürzeren Abmessung ausführen.

Eine vergleichbare Stütz- und Stabilisierungswirkung übt der Mittelzapfen 13 auch bei einem Saughub des Hohlkolbens 2 aus, bei dem entgegen den Druckkräften 25, 27 gerichtete Zugkräfte an ihm wirksam sind. Auch diese Zugkräfte werden durch den Mittelzapfen 13 sowohl auf den Deckel 12 als auch auf den Basisabschnitt 13 verteilt und dadurch in ihrer Auswirkung verringert.

Die Stütz- und Stabilisierungsfunktion des Mittelzapfens 13 wird bereits dann erfüllt, wenn der Mittelzapfen 13 sich einstückig bis zur Einformung 16 erstreckt. Bei einer solchen Ausgestaltung ist die Stütz- und Stabilisierungsfunktion des Mittelzapfens 13 jedoch auf eine Druckspannung bei einem Druckhub begrenzt, da er mangels Verbindung mit der Einformung 16 lediglich Druckspannungen weiterzuleiten vermag. Beim Vorhandensein von Zugspannungen wäre ein solcher Mittelzapfen 13 unwirksam. Da jedoch im Funktionsbetrieb der Kolbenmaschine die auftretenden Zugkräfte beim Saughub wesentlich geringer sind als beim Druckhub, kann auch ein solcher Mittelzapfen 13 die Funktionsfähigkeit der Kolbenmaschine gewährleisten, da die Gefahr einer Überlastung hauptsächlich nur bei einem Druckhub besteht.

Der Hohlkolben 2 kann nach dem Formen der Einformung 16 soweit gekürzt werden, daß seine vordere Stirnfläche 18a im mittleren Bereich der Einformung 16 endet, wobei die Stirnfläche 18a mit einen Kegelstumpf bildenden schrägen Flanken ausgebildet sein kann, die innerhalb der Einformung 16 verlaufen. Diese Maßnahme wird spanabhebend, zum Beispiel durch Abdrehen, durchgeführt. Auch nach dieser Kürzung hintergreift die Einformung 16 den Mittelzapfen 13 im Bereich des verbleibenden Abschnitts der Ringnut 16b formschlüssig.

Zur Stabilisierung und/oder Abdichtung der Fuge 28 zwischen der Einformung 16 und dem Mittelzapfen 13 können stellenweise oder auf dem genannten Umfang die Einformung 16 und der Mittelzapfen 13 miteinander verbunden sein, z. B. durch Löten oder Schweißen.

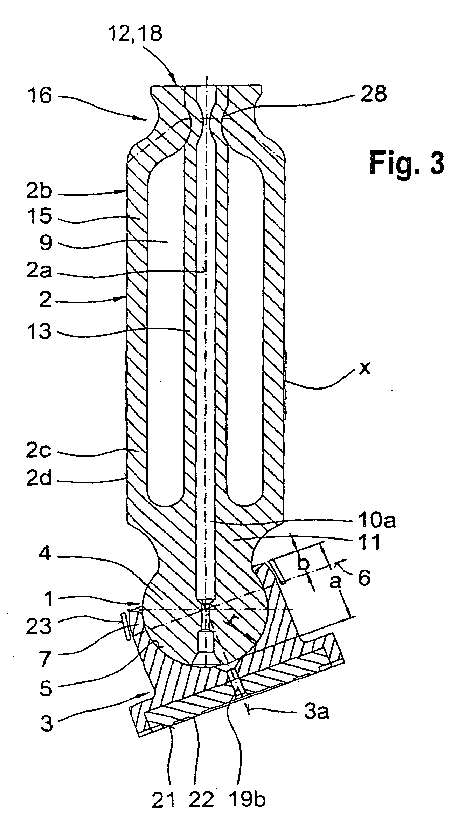

Die Fig. 3 zeigt eine Umkehrung der Kugelgelenkteile, wobei der Kugelkopf 4 am Hohlkolben 2 und die Gelenkausnehmung 5 am Gleitschuh 3 ausgebildet ist und der Ausnehmungsrand 7 am Gleitschuh 3 entsprechend warmgebördelt oder kaltgebördelt wird.

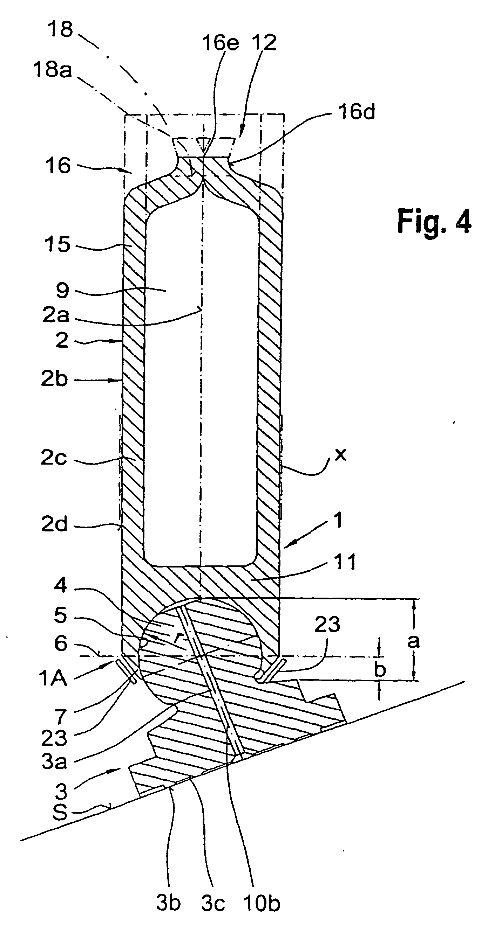

Das Ausführungsbeispiel des Hohlkolbens 2 nach Fig. 4, bei dem gleiche oder vergleichbare Teile mit gleichen Bezugszeichen versehen sind, unterscheidet sich von den vorbeschriebenen Ausführungsbeispielen dadurch, daß der Mittelzapfen 13 und ein zugehöriger Kanal 10a fehlen und die Einformung 16 durch eine auf Null eingeformte Tailierung gebildet ist, so daß die Umfangswand 15 z. B. mit ihrer Innenmantelfläche im Bereich der Taillie 16d zu einem Punkt zusammengedrückt ist, wodurch sich ein dichter Verschluß ergibt. In diesem Punkt kann die Umfangswand 15 an der Stirnseite 18a fest verbunden sein, z. B. durch Löten oder Schweißen. Diese Verbindungsstelle ist mit 16e bezeichnet.

Ein Herstellungsverfahren des Hohlkolbens 2 dieses Ausführungsbeispiels unterscheidet sich von den vorbeschriebenen Herstellungsverfahren dadurch, daß nur die Umfangswand 15 spangebend oder spanlos am Basisabschnitt 11 gebildet, insbesondere angeformt, wird und die Verschlußanordnung 12 im vorbeschriebenen Sinne ausgeführt wird. Im übrigen gelten die vorbeschriebenen Herstellungs-Verfahrensmerkmale auch für dieses Ausführungsbeispiel. Das Gelenkteil und ein zugehöriger Gleitschuh 3 können auch gemäß Fig. 3 ausgebildet und hergestellt werden.

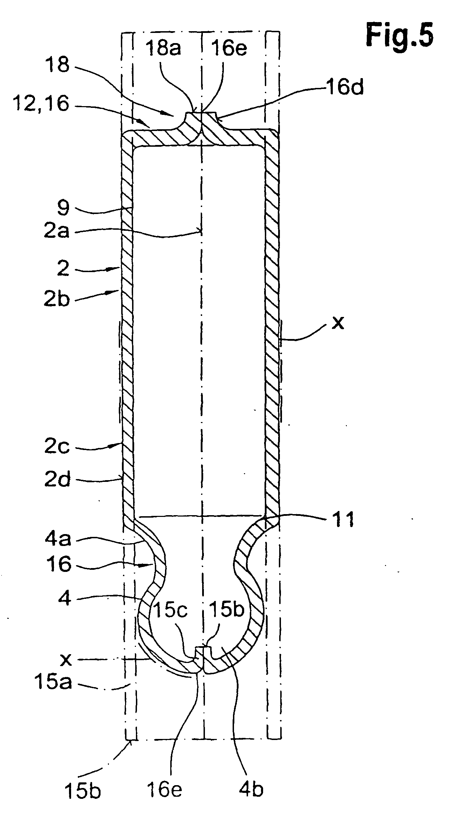

Beim Ausführungsbeispiel nach Fig. 5, bei dem gleiche oder vergleichbare Teile mit gleichen Bezugzeichen versehen sind, entspricht die Ausbildung des vorderen Endbereichs des Kolbenschaftes 2b dem Ausführungsbeispiel nach Fig. 4. Dagegen ist der Hohlkolben 2 im hinteren Endbereich ohne einen eine Querwand bildenden Basisabschnitt 11 ausgebildet und außerdem ist das Kugelgelenkteil einstückig spanlos angeformt. Bei diesem Ausführungsbeispiel wird der Hohlkolben 2 aus einem die Umfangswand 15 bildenden und deren Querabmessungen entsprechenden Rohrstück 15a gebildet, wie es Fig. 5 strichpunktiert zeigt.

Es ist nicht nur eine Verschlußanordnung 12 am vorderen Ende des Hohlkolbens 2, sondern auch das Gelenkteil am hinteren Ende durch eine Einformung 16 gebildet, die vorzugsweise durch ein Einrollen eingeformt ist. Dieses Gelenkteil ist beim vorliegenden Ausführungsbeispiel durch eine hohle Gelenkkugel 4 gebildet, die sich an einen verjüngten Kugelhals 4a einstückig anschließt. Wie bei allen vorbeschriebenen Ausführungsbeispielen ist auch hier die Gelenkkugel 4 in ihrer Querschnittsgröße kleiner bemessen, als die Querschnittsgröße des Kolbenschaftes 2b. Bei dieser Anformung zu einem Kugelkopf 4 kann die Umfangswand des Rohrstücks 15a so weit eingeformt sein, daß der freie Rand 15b der Umfangswand sozusagen zu Null eingeformt wird und punktförmig zusammengedrückt ist. Es ist jedoch auch möglich, die Einformung 16 so auszubilden, daß der freie Randbereich des Rohrstücks 15a an der Wandung des Kugelkopfes 4 ein nach innen zu dem Innenvolumen 4b hin eingeformtes Randstück 15c ergibt. Bei dieser Ausgestaltung des Kugelgelenkteils ist es zur Abdichtung und Stabilisierung ebenfalls vorteilhaft, die zusammengedrückten Umfangswandabschnitte an der punktförmigen Verbindungsstelle 16e ebenfalls zu verbinden z. B. durch Löten oder Schweißen.

Ein vorteilhaftes Herstellungsverfahren für den Hohlkolben 2 nach Fig. 5 besteht darin, daß die Verschlußanordnung 12 und/oder das Gelenkteil gleichzeitig oder nacheinander an einem Rohrstück 15a einstückig und spanlos angeformt werden, vorzugsweise durch Einrollen. Ein zugehöriger Gleitschuh ist in Fig. 5 nicht dargestellt.

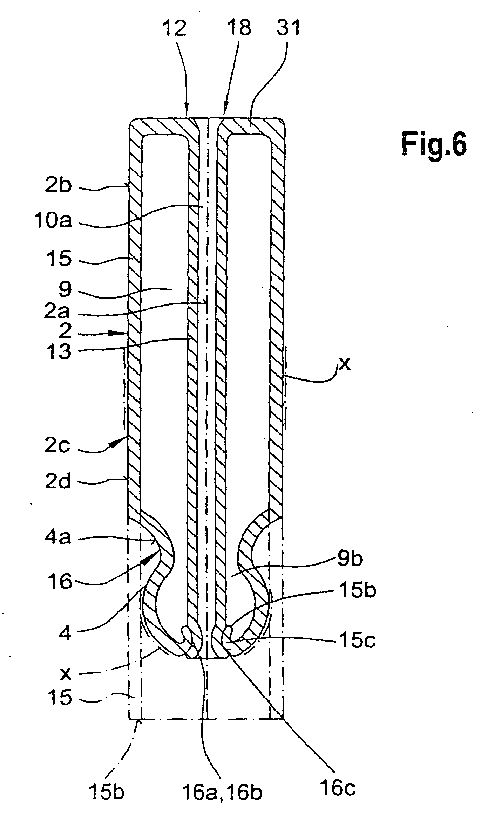

Beim Ausführungsbeispiel nach Fig. 6, bei dem ebenfalls gleiche oder vergleichbare Teile mit gleichen Bezugszeichen versehen sind, weist der Hohlkolben 2 einen Mittelzapfen 13 auf, der einstückig mit einer vorderen Stirnwand 31 der Verschlußanordnung 12 des Hohlkolbens 2 ausgebildet ist, wobei auch die Umfangswand 15 einstückig mit der Stirnwand 31 ausgebildet ist. Bei diesem Ausführungsbeispiel ist ein eine Querwand bildender Basisabschnitt 11 nicht vorgesehen. Der hintere Endbereich des Kolbenschaftes 2b einschließlich des Kugelgelenkteils ist im Sinne der Ausgestaltung nach Fig. 5 ausgebildet. Es ist nämlich das Gelenkteil einstückig aus der den Kolbenschaft 2b bildenden Umfangswand 15 durch eine Einformung 16 geformt, wobei der Mittelzapfen 13 sich bis in den Hohlraum 9b des Kugelgelenkteils hinein erstreckt und die Einformung 16 gegen den Mittelzapfen 13 eingeformt ist. Beim vorliegenden Ausführungsbeispiel ist auch hier das Kugelgelenkteil durch einen Kugelkopf 4 mit einem Kugelhals 4a gebildet, wobei der freie Rand 15b der Umfangswand 15 gegen die Außenmantelfläche des Mittelzapfens 13 geformt ist, ggf. mit einwärts gerichteten Endstücken 15c. Auch diese Einformung 16 kann in weiteren Einzelheiten entsprechend der Einformung 16 nach Fig. 1 bis 3 ausgebildet sein, auf die zwecks Vermeidung von Wiederholungen in vollem Umfang Bezug genommen wird, wie es die mit gleichen Bezugszeichen versehenen weiteren Einzelheiten dieser Einformung zeigen. Die Endstücke 15c können anstatt axial nach innen auch axial nach außen gerichtet sein.

Die einstückige Ausbildung der Umfangswand 15 und des Mittelzapfens 13 mit der Stirnwand 31 kann spangebend, z. B. durch Tiefbohren vom hinteren Ende eines entsprechenden Kolbenrohlings her oder durch spanloses Anformen an die Stirnwand 31 erfolgen. Vorteilhafte Herstellungsmaßnahmen für den letzteren Fall sind z. B. ein vorzugsweise gleichzeitiges Fließpressen der Umfangswand 15 und des Mittelzapfens 13 aus einem Rohling, dessen Rest die Stirnwand 31 bildet. Hierbei kann ein Kaltfließpressen oder Warmfließpressen zur Anwendung kommen. Es ist auch möglich, die Stirnwand 31 mit der Umfangswand 15 und dem Mittelzapfen 13 durch Sintern in einer entsprechenden Sinterform einstückig zu fertigen. In beiden Fällen wird die Umfangswand 15 in einer größeren Länge geformt als die Länge des Mittelzapfens 13, wie es Fig. 6 zeigt, um eine ausreichende Länge zum Einformen des Gelenkteils, hier des Kugelkopfes 4, zur Verfügung zu haben.

Beim Ausführungsbeispiel nach Fig. 6 ist als weiterer Vorteil noch hervorzuheben, daß der Mittelzapfen 13 als Hohlzapfen bzw. Hülse geformt werden kann, so daß ein spanabhebendes Bohren des Kanals 10a entfällt, wodurch eine weitere Vereinfachung der Herstellung gegeben ist.

Auch bei den Ausführungsbeispielen nach Fig. 4 bis 6 kann der Hohlkolben 2 zunächst mit einem Übermaß X gefertigt werden, wobei sein Kolbenschaft 2b nach dem Formen, insbesondere nach einem Härten seiner Mantelfläche 2d endbearbeitet werden kann, vorzugsweise durch Schleifen. Dies gilt auch für das durch einen Kugelkopf 4 gebildetes Gelenkteil, das ebenfalls mit einem Übermaß X vorgefertigt werden kann und nach dem Formen und vorzugsweise auch nach einem Härten endbearbeitet werden kann.

## Patentansprüche

1. Hohlkolben (2) für eine Kolbenmaschine, mit einem Basisabschnitt (11), von dem sich in der einen Achsrichtung ein Kugelgelenkteil und in der anderen Achsrichtung eine den Hohlraum (9) des Hohlkolbens (2) umgebende Umfangswand (15) erstrecken, wobei der Hohlkolben (2) einstückig ausgebildet ist,
**dadurch gekennzeichnet,**
**daß** der Hohlraum (9) im freien Endbereich des Hohlkolbens (2) durch eine Verschlußanordnung (12) geschlossen ist, die durch eine radial einwärts gerichtete und gegen sich selbst zu einem koaxialen Punkt zusammengedrückte Einformung (16) des freien Endbereichs der Umfangswand (15) gebildet ist.

2. Hohlkolben nach Anspruch 1,
**dadurch gekennzeichnet,**
**daß** die Einformung (16) durch ein Einrollen der Umfangswand (15) gebildet ist.

3. Hohlkolben nach Anspruch 1 oder 2,
**dadurch gekennzeichnet,**
**daß** die Einformung (16) mit axial angeordneten Endstücken der Umfangswand (15) geformt ist.

4. Hohlkolben nach einem der Ansprüche 1 bis 3,
**dadurch gekennzeichnet,**
**daß** die die Gelenkkugel (4) bildende Einformung (16) mit nach innen gerichteten Endstücken (15c) in einem Punkt eingeformt ist.

5. Hohlkolben (2) nach einem der vorherigen Ansprüche,
**dadurch gekennzeichnet,**
**daß** die Umfangswand (15) und der Mittelzapfen (13) durch ein spanabhebendes Ausarbeiten des Hohlraums (9) oder durch ein spanloses Anformen gebildet sind, insbesondere durch Fließpressen, oder durch Sintern einstückig gebildet bzw. geformt sind.

6. Verfahren zum Herstellen eines Hohlkolbens (2) für eine Kolbenmaschine, mit folgenden Verfahrensschritten:
Ausbilden des Hohlkolbens (2) mit einem Basisabschnitt (11), mit einem sich vom Basisabschnitt (11) in der einen Achsrichtung erstreckenden Kugelgelenkteil und mit einer sich vom Basisabschnitt (11) in der anderen Achsrichtung erstreckenden und einen Hohlraum (9) umgebenden hohlzylindrischen Umfangswand (15),
**dadurch gekennzeichnet,**
**daß** der Hohlraum (9) durch ein radial einwärts gerichtetes Einformen und Zusammendrücken gegen sich selbst zu einem koaxialen Punkt des freien Endbereichs (15b) der Umfangswand (15) geschlossen wird.

7. Verfahren nach Anspruch 6,
**dadurch gekennzeichnet,**
**daß** die Umfangswand (15) eingerollt wird.

8. Verfahren nach Anspruch 6 oder 7,
**dadurch gekennzeichnet,**
**daß** der Hohlkolben (2) mit einem einstückig am Basisabschnitt (11) oder an einer Stirnwand (31) am freien Ende des Hohlkolbens (2) angeordneten Mittelzapfen (13) ausgebildet wird und die Umfangswand (15) in eine den Mittelzapfen (13) direkt hintergreifende Position geformt wird.

9. Verfahren nach einem der Ansprüche 6 bis 8,
**dadurch gekennzeichnet,**
**daß** der Hohlkolben (2) mit einem Querschnittsübermaß (X) ausgebildet wird und nach dem Einformen der Umfangswand (15) wenigstens die Mantelfläche (2c) des Hohlkolbens (2) gehärtet, insbesondere nitriergehärtet, wird und dann spanabhebend nachbearbeitet wird, insbesondere durch Schleifen.

## Claims

1. Hollow piston (2) for a piston machine, with a base section (11), from which a ball-and-socket-joint part extends in one axial direction and a circumferential wall (15) surrounding the hollow space (9) of the hollow piston (2) extends in the other axial direction, the hollow piston (2) being integrally constructed,
**characterised**
**in that** the hollow space (9) is closed in the free end region of the hollow piston (2) by a closing arrangement (12) which is formed by a radially inwardly directed indentation (16), pressed together against itself to a coaxial point, of the free end region of the circumferential wall (15).

2. Hollow piston according to Claim 1,
**characterised**
**in that** the indentation (16) is formed by rolling-in of the circumferential wall (15).

3. Hollow piston according to Claim 1 or 2,
**characterised**
**in that** the indentation (16) is formed with axially arranged end pieces of the circumferential wall (15).

4. Hollow piston according to one of Claims 1 to 3,
**characterised**
**in that** the indentation (16) forming the joint ball (4) is inwardly shaped with inwardly directed end pieces (15c) at a point.

5. Hollow piston (2) according to one of the preceding claims,
**characterised**
**in that** the circumferential wall (15) and the central stem (13) are formed by cutting out the hollow space (9) or by shaping-on by non-cutting means, in particular by extrusion, or are integrally formed or shaped by sintering.

6. Process for producing a hollow piston (2) for a piston machine, having the following process steps:
constructing the hollow piston (2) with a base section (11), with a ball-and-socket-joint part extending from the base section (11) in one axial direction and with a hollow-cylindrical circumferential wall (15) extending from the base section (11) in the other axial direction and surrounding a hollow space (9),
**characterised**
**in that** the hollow space (9) is closed by radially inwardly directed shaping, and pressing together against itself to a coaxial point, of the free end region (15b) of the circumferential wall (15).

7. Process according to Claim 6,
**characterised**
**in that** the circumferential wall (15) is rolled in.

8. Process according to Claim 6 or 7,
**characterised**
**in that** the hollow piston (2) is constructed with a central stem (13) arranged integrally on the base section (11) or on an end wall (31) at the free end of the hollow piston (2) and the circumferential wall (15) is shaped into a position in which it grips directly behind the central stem (13).

9. Process according to one of Claims 6 to 8,
**characterised**
**in that** the hollow piston (2) is constructed with a cross-sectional overdimension (X) and after the inward shaping of the circumferential wall (15) at least the lateral surface (2c) of the hollow piston (2) is hardened, in particular nitride-hardened, and then remachined, in particular by grinding.

## Revendications

1. Piston creux (2) pour une machine à piston, comportant un tronçon de base (11) à partir duquel s'étendent une partie formant articulation à rotule dans l'une des directions axiales et une paroi périphérique (15) dans l'autre direction axiale, paroi qui entoure la cavité (9) du piston creux (2), dans lequel le piston creux (2) est formé d'un seul tenant,
**caractérisé en ce que**
la chambre creuse (9) dans la zone d'extrémité libre du piston creux (2) est fermée par un dispositif obturateur (12) qui, par une partie rétrécie (16) dirigée radialement vers l'intérieur, est comprimé contre un pont axial de la zone d'extrémité libre de la paroi périphérique (15).

2. Piston creux selon la revendication 1,
**caractérisé en ce que**
la partie rétrécie (16) est formée par galetage de la paroi périphérique (15).

3. Piston creux selon la revendication 1 ou 2,
**caractérisé en ce que** la partie rétrécie (16) est formée par des éléments d'extrémité disposés axialement de la paroi périphérique (15).

4. Piston creux selon l'une des revendications 1 à 3,
**caractérisé en ce que**
la partie rétrécie (16) formant la rotule d'articulation (4) est formée avec des éléments d'extrémité dirigés vers l'intérieur (15c) en un point.

5. Piston creux (2) selon l'une des revendications précédentes,
**caractérisé en ce que**
la paroi périphérique (15) et le pivot central (13) sont formés par usinage de la cavité (9) avec enlèvement de matière ou par mise en forme sans enlèvement de matière, en particulier par formage par fluage, ou bien sont réalisés ou formés par frittage d'un seul tenant.

6. Procédé pour la réalisation d'un piston creux (2) pour une machine à piston, comportant les étapes suivantes :
formation du piston creux (2) avec une section de base (11), avec une partie formant articulation s'étendant depuis la section de base (11) dans une direction axiale et avec une section de base (11) s'étendant dans l'autre direction axiale et une paroi périphérique (15) cylindrique creuse entourant une chambre creuse (9),
**caractérisé en ce que**
la chambre creuse (9) est fermée par un rétrécissement dirigé radialement vers l'intérieur et comprimée contre elle-même en un point coaxial de la zone d'extrémité libre (15b) de la paroi périphérique (15).

7. Procédé selon la revendication 6,
**caractérisé en ce que** la paroi périphérique (15) est rétrécie par galetage.

8. Procédé selon la revendication 6 ou 7,
**caractérisé en ce que**
le piston creux (2) est formé avec un pivot médian (13) disposé sur l'extrémité libre du piston creux (2) et d'une seule pièce sur la section de base (11) ou sur une paroi frontale (31) sur l'extrémité libre du piston creux, et la paroi périphérique (15) est formée dans une position dans laquelle elle serre directement le pivot central (13).

9. Procédé selon les revendications 6 à 8,
**caractérisé en ce que**
le piston creux (2) est formé avec une surdimension de section transversale (X) et, après le rétrécissement de la paroi périphérique (15), au moins la surface de l'enveloppe (2c) du piston creux est durcie, en particulier par nitruration, et ensuite par réusinage par enlèvement de matière, en particulier par meulage.
